# EUROPÄISCHE PATENTSCHRIFT

(11) **EP 2 505 720 B1**
(45) Veröffentlichungstag und Bekanntmachung des Hinweises auf die Patenterteilung: **29.04.2015**
(21) Anmeldenummer: 12160478.9
(22) Anmeldetag: 21.03.2012
(51) Int. Cl.: E02D 29/02, F24J 3/08, E02D 17/20

(54) **Böschungsbauwerk und Verwendung einer geschlossenen Rohrleitung in einem Böschungsbauwerk oder Erdkörper**
Embankment structure and use of a closed pipeline in an embankment structure or earth body
Structure de talus et utilisation d'une conduite fermée dans une structure de talus ou une masse de terre

(30) Priorität: 28.03.2011 DE 102011006190
(43) Veröffentlichungstag der Anmeldung: 03.10.2012
(73) Patentinhaber: Herold, Andreas, 99425 Weimar-Taubach (DE)
(72) Erfinder: Herold, Andreas, 99425 Weimar-Taubach (DE)
(74) Vertreter: Liedtke, Markus

(56) Entgegenhaltungen:
- EP-A1- 2 241 850
- EP-A2- 1 655 566
- DE-A1- 2 626 650
- DE-A1-102008 062 820

## Beschreibung

Die Erfindung betrifft ein Böschungsbauwerk oder Erdkörper gemäß dem Oberbegriff von Anspruch 1. Die Erfindung betrifft zudem eine Verwendung einer geschlossenen Rohrleitung gemäß Anspruch 11.

Im Stand der Technik sind Bewehrungsanordnungen für Erdbauwerke bekannt, wie beispielsweise für Böschungsbauwerke, Straßen oder Erdfallanwendungen, wobei Geokunststoffe als Bewehrungselement im jeweiligen Erdbauwerk meist horizontal verlegt und dadurch verankert werden, so dass Zugkräfte in diese Geokunststoffe als Bewehrungselemente einleitbar sind.

Im Stand der Technik sind zudem gattungsgemäße Böschungsbauwerke bekannt, die eine oder mehrere im Wesentlichen horizontal übereinander angeordnete Erdstofflagen und dazwischen angeordnete Bewehrungselemente umfassen, welche als Geokunststoff ausgebildet sind.

Aus EP 1 655 566 A2 ist ein flexibles, mehrlagiges Verbundmaterial bekannt, das aus mindesten einer flexiblen Trägerlage besteht, auf der ein Rohr- oder Schlauchsystem aus flexiblen Rohren oder Schläuchen befestigt ist.

Sie offenbart ferner einen Endkörper nach dem Oberbegriff von Anspruch 1.

Aus DE 10 2008 062 820 A1 ist ein Böschungsbauwerk mit Lagen von Erdstoff bekannt, die jeweils ein luftseitiges Abschlusselement aufweisen, die mit in den Erdstoff gerichteten Rückverankerungen verbunden sind.

Aus der deutschen Offenlegungsschrift 26 26 650 ist ein Verfahren bekannt zur Herstellung von armierten Erdbauwerken bekannt, bei dem dünne Lagen von Armierungselementen aufeinandergeschichtet werden.

Im Stand der Technik sind daher Verbundkonstruktionen bekannt, bei denen ein flächiger Träger als Bewehrungselement ausbildet ist und bei denen eine Rohrleitung als flexibles Element oder als Schlauch ausgebildet ist.

Der Erfindung liegt die Aufgabe zugrunde, ein verbessertes Böschungsbauwerk sowie eine vorteilhafte Verwendung einer geschlossenen Rohrleitung anzugeben.

Die Aufgabe wird erfindungsgemäß hinsichtlich des Böschungsbauwerks durch die in Anspruch 1 angegebene Merkmalskombination gelöst.

Vorteilhafte Ausgestaltungen der Erfindung sind Gegenstand der Unteransprüche.

Eine Bewehrungsanordnung für ein erfindungsgemäßes Böschungsbauwerk wird beispielsweise in Böschungsbauwerken angewendet. Erfindungsgemäß ist dabei eine geschlossene Rohrleitung auf einem Bewehrungselement aus Geokunststoff verlegt und/oder mit diesem verbunden. Eine geschlossene Rohrleitung ist dabei eine solche Rohrleitung, die zumindest zwischen Kopplungselementen am Anfang und am Ende der Rohrleitung fluiddicht ist. Die Rohrleitung ist dabei derart zugfest, dass sie nicht nur als Teil einer Geothermieanlage, sondern auch als Bewehrung verwendbar ist.

Ein Böschungsbauwerk umfasst mehrere im Wesentlichen horizontal übereinander angeordnete Erdstofflagen, wobei zwischen diesen Erdstofflagen Bewehrungselemente angeordnet sind, die der Verbesserung der Standfestigkeit und der Dauerhaftigkeit des Böschungsbauwerks dienen. Als Erdstofflagen werden Lagen von Erdstoff oder Baustoff bezeichnet, der lagenweise einbringbar und bevorzugt verdichtungsfähig ist. Dabei können die Bewehrungselemente jeweils zwischen allen jeweils benachbarten oder zumindest zwischen einigen der benachbarten Erdstofflagen angeordnet sein.

Erfindungsgemäß ist im Bereich von einigen oder allen Bewehrungselementen jeweils eine geschlossene, also von einem Fluid durchströmbare Rohrleitung angeordnet. Unter Rohrleitungen sollen im Folgenden insbesondere im Wesentlichen horizontal angeordnete Elemente einer Geothermieanlage verstanden werden. Bevorzugt sind die Rohrleitungen zwischen einigen der benachbarten Erdstofflagen oder jeweils in einer Erdstofflage verlegt. Erfindungsgemäß sind die Rohrleitungen nicht nur als Element einer Geothermieanlage verwendbar, sondern auch zugfest ausgebildet.

Damit übernehmen die Rohrleitungen erfindungsgemäß zwei Funktionen, nämlich einerseits die Funktion eines Wärmetauschers in einer Geothermieanlage und andererseits die Funktion einer Bewehrung.

Letztgenannte Funktion dient der Verbesserung der Statik, so dass die Standfestigkeit und die Dauerhaftigkeit des Böschungsbauwerks verbessert sind.

Die Rohrleitung dient zur erstgenannten Funktion zur Führung eines Fluids, welches als Wärmeträgermedium dient und zur Ausnutzung von Temperaturunterschieden zwischen dem Inneren des Böschungsbauwerkes und dem Bereich außerhalb desselben entweder dem Böschungsbauwerk Wärme entzieht, die anderweitig genutzt wird oder in das Böschungsbauwerk Wärme einleitet, um das Fluid zu kühlen, so dass dasselbe selbst als Kühlmedium beispielsweise für ein Gebäude oder eine technische Anlage nutzbar ist.

Die Rohrleitung ist erfindungsgemäß derart zugfest, dass sie als horizontale Bewehrung verwendbar ist. Die Rohrleitung ist beispielsweise dann ausreichend zugfest, wenn sie aus Kunststoff, insbesondere aus Geokunststoff, gebildet ist. Verbindungsstellen einzelner Rohrleitungsabschnitte sind gemäß einer ersten Alternative so zugfest ausgebildet, dass jede Verbindungsstelle wenigstens die gleiche Zugfestigkeit aufweist wie ein Rohrleitungsabschnitt selbst. Gemäß einer zweiten Alternative werden Verbindungsstellen von Rohrleitungsabschnitten an solchen Stellen angeordnet, an denen einer statischen Berechung zufolge nennenswerte Zugkräfte nicht auftreten.

Erstaunlicherweise hat sich gezeigt, dass die Temperaturunterschiede zwischen dem Inneren des Böschungsbauwerkes und dem Bereich außerhalb desselben insbesondere bei größeren Böschungsbauwerken beträchtlich sind, so dass mit einer herkömmlichen Geothermieanlage mit ausschließlich im Wesentlichen vertikalen Leitungen vergleichbare Wirkungsgrade erzielbar sind. Gegenüber diesen herkömmlichen Geothermieanlagen ist bei Errichtung des erfindungsgemäßen Böschungsbauwerkes die Errichtung einer Geothermieanlage, welche Bestandteil des Böschungsbauwerkes ist, wesentlich erleichtert, da die Rohrleitungen hier in einfacher Weise horizontal verlegbar sind.

Das erfindungsgemäße Böschungsbauwerk sieht vor, dass eine Rohrleitung derart mäanderförmig innerhalb einer Erdstofflage, insbesondere auch unmittelbar in deren unterem Bereich auf einem korrespondierenden Bewehrungselement angeordnet ist, dass eine Anzahl von ersten, im Wesentlichen geraden ersten horizontalen Rohrleitungsabschnitten im Wesentlichen rechtwinklig zum luftseitigen Rand dieser Erdstofflage verlaufen, wobei jeweils zwei benachbarte erste Rohrleitungsabschnitte jeweils geraden Verlaufes jeweils mittels eines u-förmigen zweiten Rohrleitungsabschnitts verbunden sind. Unter einem im Wesentlichen rechtwinkligen Verlauf sollen weniger als 20° Abweichung verstanden werden. Durch diese Anordnung der ersten Rohrleitungsabschnitte, im Wesentlichen in Richtung einer Hauptspannungsrichtung der flächigen Bewehrungselemente in Kombination mit ihrer zugfesten Ausbildung, sind von den ersten Rohrleitungsabschnitten hohe Zugkräfte aufnehmbar, wodurch besonders wirkungsvoll Standfestigkeit und die Dauerhaftigkeit und damit die Statik des Böschungsbauwerks verbessert sind.

Das Bewehrungselement ist bevorzugt ein Geokunststoff, insbesondere ein polymerer Geokunststoff Besonders bevorzugt ist es als Gewebe und/oder als Gitter und/oder als Vlies ausgebildet und dadurch in verschiedenen Erdbauwerken flächig verlegbar, so dass in an sich bekannter Weise Zugkräfte verankert werden können. Es ist besonders günstig, die Rohrleitung in Zugkraftrichtung anzuordnen und/oder mit dem flächigen Geokunststoff zu verbinden, da dann die Rohrleitung besonders effektiv als Bewehrung wirkt, so dass der flächige Geokunststoff als Bewehrungselement in seiner Hauptbeanspruchungsrichtung geringer dimensioniert werden kann als im Stand der Technik.

Eine Ausgestaltung der im erfindungsgemäßen Erdkörper benützten Bewehrungsanordnung sieht vor, dass die Rohrleitung aus Kunststoff gebildet ist. Es ist möglich, dass die Rohrleitung aus dem gleichen Kunststoff wie das Bewehrungselement besteht, so dass Rohrleitung und Bewehrungselement unter Einwirkung der zu verankernden Zugkraft gleiche Verformungseigenschaften aufweisen. Dadurch eignet sich diese Bewehrungsanordnung besonders zur Errichtung von Erdbauwerken, die eine besonders belastbare Bewehrung erfordern. Durch die Erfindung werden die Standfestigkeit und die Dauerhaftigkeit des Böschungsbauwerks verbessert.

Eine Ausgestaltung der Erfindung sieht vor, dass die Rohrleitung ein Kopplungselement aufweist, mit dem sie mit einer Vorlaufleitung oder einer Rücklaufleitung einer Geothermieanlage verbindbar ist. Ebenso ist die Rohrleitung mittels des Kopplungselementes mit einer weiteren Rohrleitung oder einem weiteren Kopplungselement dieser weiteren Rohrleitung verbindbar, so dass auf einfache Weise gleichzeitig sowohl eine Geothermieanlage errichtet als auch ein Erdbauwerk bewehrt werden kann.

Eine weitere Ausgestaltung des erfindungsgemäßen Böschungsbauwerks sieht vor, dass innerhalb einer Erdstofflage angeordnete erste und zweite Rohrleitungsabschnitte insbesondere innerhalb einer Lage, besonders bevorzugt auch über mehrere Lagen hinweg einstückig ausgebildet sind. Einstückig heißt insbesondere, dass die Rohrleitungsabschnitte keine Koppel- oder sonstige Verbindungsstellen aufweisen, und zwar weder zwischen einem ersten Rohrleitungsabschnitt und einem zweiten Rohrleitungsabschnitt noch innerhalb des ersten oder zweiten Rohrleitungsabschnittes. Koppelstellen sind bevorzugt also allenfalls am erdseitigen Ende oder Rand des Bewehrungselementes angeordnet. Dadurch sind insbesondere die Bereiche derjenigen Rohrleitungsabschnitte koppelstellenfrei, in denen besonders hohe Zugkräfte zu erwarten sind. Für den Fall, dass erste und zweite Rohrleitungsabschnitte über mehrere Lagen hinweg einstückig ausgebildet sind, sind Rohrleitungsabschnitte übereinander liegender Lagen gemeinsam mit deren vertikalen Verbindungsabschnitten einstückig ausgebildet.

Erfindungsgemäß ist eine Rohrleitung auf einem Bewehrungselement verlegt und besonders bevorzugt mit diesem verbunden. Vor allem wenn ein maschenförmiges Bewehrungselement wie Geokunststoff als Gewebe oder Gitter verwendet wird, können erste Rohrleitungsabschnitte besonders einfach am jeweiligen Gitter ausgerichtet und gerade verlegt werden. Ein Bewehrungselement und eine Rohrleitung wirken statisch besonders gut gemeinsam, wenn sie verbunden sind.

Zur Errichtung eines erfindungsgemäßen Böschungsbauwerks ist insbesondere polymerer Geokunststoff geeignet, welcher verrottungsfest und daher besonders dauerhaft ist. Derartige Bewehrungselemente als Gewebe und/oder als Gitter und/oder als Vlies werden in an sich bekannter Weise verlegt, wobei in einer Lage jeweils mehrere verschiedene oder in verschiedenen Lagen jeweils verschiedene Bewehrungselemente verlegt werden können.

Erfindungsgemäß besteht eine Rohrleitung aus Kunststoff, wodurch diese besonders einfach verlegbar und mit den weiteren Elementen der Geothermieanlage verbindbar ist.

Dadurch, dass die Rohrleitung in bevorzugter Weise wenigstens eine im Wesentlichen vertikale Vorlaufleitung und wenigstens eine im Wesentlichen vertikale Rücklaufleitung aufweist, ist eine Geothermieanlage in einfacher Weise herstellbar. Gemäß einer ersten Alternative sind die Rohrleitungen aller Lagen in Reihe miteinander verbunden. Gemäß einer zweiten Alternative werden die Rohrleitungen jeweils einer Lage unabhängig voneinander von dem Fluid durchströmt, so dass die Rohrleitung jeweils einer Lage ein separat betreibbares Element der Geothermieanlage darstellt. Gemäß einer dritten Alternative sind die Rohrleitungen aller Lagen strömungstechnisch parallel ausgestaltet. Es ist möglich, mehrere dieser alternativen Ausgestaltungen in einem Böschungsbauwerk anzuwenden.

Es ist möglich, die Bewehrungsanordnung statt in einem Böschungsbauwerk in einem Erdkörper anzuordnen, wobei der Erdkörper mehrere im Wesentlichen horizontal übereinander angeordnete Erdstofflagen umfasst, wobei zwischen den Erdstofflagen Bewehrungselemente angeordnet sind. Derartige bewehrte Erdkörper können Dämme, insbesondere solche auf wenig tragfähigem Untergrund, Verkehrswege, bewehrte Gründungskörper, Stützkonstruktionen, Deponiebauten, bewehrte Erdkörper auf punkt- oder linienförmigen Traggliedern, mit Geokunststoff ummantelte Säulen oder Überbrückungen von Erdeinbrüchen sein.

In derartigen Erdkörpern wird bevorzugt eine geschlossene Rohrleitung gleichzeitig sowohl als Element einer Geothermieanlage als auch als horizontale Bewehrung verwendet.

Ausführungsbeispiele der Erfindung werden im Folgenden anhand von Zeichnungen näher erläutert.

Darin zeigen:
- Figur 1: eine schematische Schnittdarstellung eines erfindungsgemäßen Böschungsbauwerkes und
- Figur 2: eine schematische perspektivische Darstellung einer einzelnen Lage eines flächigen Bewehrungselementes mit einer Rohrleitung, das im erfindungsgemäßen Erdkörper oder Böschungsbauwerk benützbar ist.

Einander entsprechende Teile sind in allen Figuren mit den gleichen Bezugszeichen versehen.

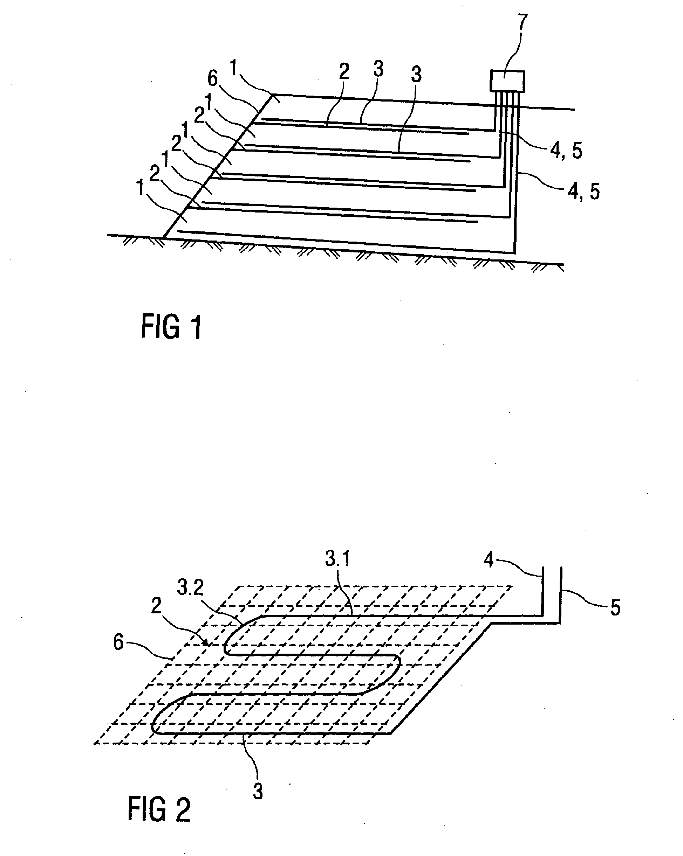

**Figur 1** zeigt ein Böschungsbauwerk, das aus fünf horizontal übereinander angeordneten Erdstofflagen 1 gebildet ist, zwischen denen vier Lagen von Bewehrungselementen 2 angeordnet sind, die aus einer Matte aus Geokunststoff gebildet sind. Oberhalb jeder Lage von Bewehrungselementen 2 sowie oberhalb eines Baugrundes unter dem Böschungsbauwerk ist jeweils eine geschlossene Rohrleitung 3 verlegt. Die Rohrleitungen 3 sind Elemente einer Geothermieanlage, die durch eine Geothermiesonde 7 dargestellt ist. Eine oberhalb eines Bewehrungselementes 2 verlegte Rohrleitung 3 ist in nicht gezeigter Weise mit dem korrespondierenden Bewehrungselement 2 verbunden. Alle Rohrleitungen 3 sind jeweils mit jeweils einem Ende mit einer vertikalen Vorlaufleitung 4 und jeweils mit einem zweiten Ende mit einer vertikalen Rücklaufleitung 5 verbunden.

Die Rohrleitungen 3 bestehen aus Kunststoff und sind derart zugfest, dass sie als horizontale Bewehrung wirksam sind. Von einer Luftseite 6 des Böschungsbauwerks, an der die Bewehrungselemente 2 in üblicher Weise verankert sind, sind die Rohrleitungen 3 beabstandet angeordnet, wobei sie in diesem Bereich schlaufenartig wie in Figur 2 gezeigt ausgebildet sind. Gemäß dieser Ausführungsform werden die Rohrleitungen 3 jeweils einer Lage unabhängig voneinander von einem Fluid durchströmt, so dass die Rohrleitung 3 jeweils einer Lage ein separat betreibbares Element dieser Geothermieanlage darstellt.

**Figur 2** zeigt eine einzelne Lage eines flächigen Bewehrungselementes 2, auf dem eine Lage einer Rohrleitung 3 verlegt und befestigt ist. Die Rohrleitung 3 umfasst vier gerade erste Rohrleitungsabschnitte 3.1 und drei u-förmige zweite Rohrleitungsabschnitte 3.2, wobei die ersten Rohrleitungsabschnitte 3.1 rechtwinklig zu dem luftseitigen Rand des Bewehrungselementes 2 verlaufen, so dass die ersten Rohrleitungsabschnitte 3.1 als Bewehrung dienen und das Bewehrungselement 2 in der Richtung unterstützen, die rechtwinklig zu dem luftseitigen Rand verläuft. Ein erstes Ende der mäanderförmig verlegten Rohrleitung 3 ist mit der vertikalen Vorlaufleitung 4 verbunden, das zweite Ende der mäanderförmig verlegten Rohrleitung 3 ist mit einer vertikalen Rücklaufleitung 5 einer Geothermieanlage verbunden.

Es ist möglich, die in den Figuren dargestellte Bewehrungsanordnung für ein anderes Erdbauwerk als das dargestellte Böschungsbauwerk zu verwenden.

### BEZUGSZEICHENLISTE

- 1: Erdstofflage
- 2: Bewehrungselement
- 3: Rohrleitung
3.1 erster Rohrleitungsabschnitt
3.2 zweiter Rohrleitungsabschnitt
- 4: Vorlaufleitung
- 5: Rücklaufleitung
- 6: Luftseite
- 7: Geothermiesonde

## Patentansprüche

1. Böschungsbauwerk oder Erdkörper, wobei eine geschlossene Rohrleitung (3) auf einem Bewehrungselement (2) aus Geokunststoff, insbesondere aus polymerem Geokunststoff, verlegt und/oder mit diesem verbunden ist, wobei die Rohrleitung (3) derart zugfest ist, dass sie als horizontale Bewehrung verwendbar ist,
**dadurch gekennzeichnet, dass** das Bauwerk oder der Erdkörper mehrere im Wesentlichen horizontal übereinander angeordnete Erdstofflagen (1) und zwischen Erdstofflagen (1) angeordnete Bewehrungselemente (2) umfasst, wobei im Bereich der Bewehrungselemente (2) jeweils eine geschlossene Rohrleitung (3) angeordnet ist, die als Element einer Geothermieanlage verwendbar ist,
wobei die Rohrleitung (3) derart mäanderförmig innerhalb einer Erdstofflage (1) angeordnet ist, dass eine Anzahl von ersten, im Wesentlichen geraden ersten horizontalen Rohrleitungsabschnitten (3.1) im Wesentlichen rechtwinklig zum luftseitigen Rand dieser Erdstofflage (1) verläuft.

2. Böschungsbauwerk oder Erdkörper nach Anspruch 1,
**dadurch gekennzeichnet, dass** jeweils zwei benachbarte erste Rohrleitungsabschnitte (3.1) mittels eines u-förmigen zweiten Rohrleitungsabschnitts (3.2) verbunden sind.

3. Böschungsbauwerk oder Erdkörper nach Anspruch 1,
**dadurch gekennzeichnet, dass** innerhalb einer Erdstofflage (1) angeordnete erste und zweite Rohrleitungsabschnitte (3.1, 3.2) einstückig ausgebildet sind.

4. Böschungsbauwerk oder Erdkörper nach einem der vorhergehenden Ansprüche,
**dadurch gekennzeichnet, dass** Bewehrungselemente (2) als Geokunststoff, insbesondere als polymerer Geokunststoff ausgebildet sind.

5. Böschungsbauwerk oder Erdkörper nach Anspruch 5,
**dadurch gekennzeichnet, dass** Bewehrungselemente (2) als Gewebe und/oder als Gitter und/oder als Vlies ausgebildet sind.

6. Böschungsbauwerk oder Erdkörper nach einem der vorhergehenden Ansprüche,
**dadurch gekennzeichnet, dass** die Rohrleitung (3) aus Kunststoff besteht.

7. Böschungsbauwerk oder Erdkörper nach einem der vorhergehenden Ansprüche,
**dadurch gekennzeichnet, dass** eine Anzahl von im Wesentlichen vertikalen Vorlaufleitungen (4) und eine Anzahl von im Wesentlichen vertikalen Rücklaufleitungen (5) vorgesehen sind, die jeweils mit den horizontalen Rohrleitungen (3) verbunden sind.

8. Böschungsbauwerk oder Erdkörper nach einem der vorhergehenden Ansprüche,
**dadurch gekennzeichnet, dass** die Rohrleitung (3) aus Kunststoff gebildet ist und dass das Bewehrungselement (2) als Gewebe und/oder als Gitter und/oder als Vlies ausgebildet ist.

9. Böschungsbauwerk oder Erdkörper nach einem der vorhergehenden Ansprüche,
**dadurch gekennzeichnet, dass** die Rohrleitung (3) ein Kopplungselement aufweist, mit dem sie mit einer Vorlaufleitung (4) oder einer Rücklaufleitung (5) einer Geothermieanlage oder mit einer weiteren Rohrleitung (3) oder einem weiteren Kopplungselement der weiteren Rohrleitung (3) verbindbar ist.

10. Verwendung einer geschlossenen Rohrleitung (3) in einem Böschungsbauwerk oder Erdkörper gemäß einem der vorhergehenden Ansprüche, gleichzeitig sowohl als Element einer Geothermieanlage als auch als horizontale Bewehrung.

## Claims

1. Embankment structure or earth body, wherein a closed pipeline (3) is laid on a reinforcing element (2) of geosynthetic material, in particular of polymeric geosynthetic material, and/or is connected thereto, wherein the pipeline (3) is of such tensile strength that it is usable as a horizontal reinforcement, **characterized in that** the structure or the earth body comprises a plurality of earth material layers (1) arranged substantially horizontally above one another and reinforcing elements (2) arranged between earth material layers (1), wherein, in the region of the reinforcing elements (2), in each case a closed pipeline (3) is arranged which is usable as an element of a geothermal system, wherein the pipeline (3) is arranged in a meandering shape within an earth material layer (1) such that a number of first, substantially straight horizontal pipeline sections (3.1) extends substantially at right angles to the air-side edge of this earth material layer (1).

2. Embankment structure or earth body according to Claim 1, **characterized in that** in each case two adjacent first pipeline sections (3.1) are connected by means of a u-shaped second pipeline section (3.2).

3. Embankment structure or earth body according to Claim 1, **characterized in that** first and second pipeline sections (3.1, 3.2) arranged within an earth material layer (1) are formed in one piece.

4. Embankment structure or earth body according to one of the preceding claims, **characterized in that** reinforcing elements (2) are formed as geosynthetic materials, in particular as polymeric geosynthetic materials.

5. Embankment structure or earth body according to Claim 5, **characterized in that** reinforcing elements (2) are formed as wovens and/or as meshes and/or as non-wovens.

6. Embankment structure or earth body according to one of the preceding claims, **characterized in that** the pipeline (3) is made of plastic.

7. Embankment structure or earth body according to one of the preceding claims, **characterized in that** a number of substantially vertical supply lines (4) and a number of substantially vertical return lines (5) are provided which are in each case connected to the horizontal pipelines (3).

8. Embankment structure or earth body according to one of the preceding claims, **characterized in that** the pipeline (3) is formed of plastic, and **in that** the reinforcing element (2) is formed as a woven and/or as a mesh and/or as a non-woven.

9. Embankment structure or earth body according to one of the preceding claims, **characterized in that** the pipeline (3) has a coupling element by which it is connectable to a supply line (4) or a return line (5) of a geothermal system or to a further pipeline (3) or a further coupling element of the further pipeline (3).

10. Use of a closed pipeline (3) in an embankment structure or earth body according to one of the preceding claims, at the same time both as an element of a geothermal system and as a horizontal reinforcement.

## Revendications

1. Structure de talus ou masse de terre, dans laquelle une conduite fermée (3) est posée sur un élément d'armature (2) en géotextile synthétique, en particulier en géotextile synthétique polymère, et/ou est assemblée à celui-ci, dans laquelle la conduite (3) est résistante à la traction, de telle manière qu'elle puisse être utilisée comme armature horizontale, **caractérisée en ce que** la structure de talus ou la masse de terre comprend plusieurs couches de terre (1) disposées essentiellement à l'horizontale l'une au-dessus de l'autre et plusieurs éléments d'armature (2) disposés entre les couches de terre (1), dans laquelle une conduite fermée (3) est disposée respectivement dans la région des éléments d'armature (2) et peut être utilisée comme élément d'une installation de géothermie, dans laquelle la conduite (3) est disposée de façon sinueuse à l'intérieur d'une couche de terre (1), de telle manière qu'un nombre de premières sections de conduite horizontales essentiellement droites (3.1) soient essentiellement perpendiculaires au bord aérien de cette couche de terre (1).

2. Structure de talus ou masse de terre selon la revendication 1, **caractérisée en ce que** deux premières sections de conduite voisines (3.1) sont reliées respectivement au moyen d'une deuxième section de conduite en forme de U (3.2).

3. Structure de talus ou masse de terre selon la revendication 1, **caractérisée en ce que** des premières et des deuxièmes sections de conduite (3.1, 3.2) disposées à l'intérieur d'une couche de terre (1) sont réalisées en une seule pièce.

4. Structure de talus ou masse de terre selon l'une quelconque des revendications précédentes, **caractérisée en ce que** des éléments d'armature (2) sont réalisés sous forme de géotextile synthétique, en particulier de géotextile synthétique polymère.

5. Structure de talus ou masse de terre selon la revendication 5, **caractérisée en ce que** des éléments d'armature (2) sont réalisés sous forme de tissu et/ou de treillis et/ou de non-tissé.

6. Structure de talus ou masse de terre selon l'une quelconque des revendications précédentes, **caractérisée en ce que** la conduite (3) se compose de matière plastique.

7. Structure de talus ou masse de terre selon l'une quelconque des revendications précédentes, **caractérisée en ce qu'**il est prévu un nombre de conduites d'arrivée essentiellement verticales (4) et un nombre de conduites de retour essentiellement verticales (5), qui sont respectivement raccordées aux conduites horizontales (3).

8. Structure de talus ou masse de terre selon l'une quelconque des revendications précédentes, **caractérisée en ce que** la conduite (3) est formée de matière plastique et **en ce que** l'élément d'armature (2) est réalisé sous forme de tissu et/ou de treillis et/ou de non-tissé.

9. Structure de talus ou masse de terre selon l'une quelconque des revendications précédentes, **caractérisée en ce que** la conduite (3) présente un élément de couplage, avec lequel elle peut être raccordée à une conduit d'arrivée (4) ou à une conduite de retour (5) d'une installation de géothermie ou à une autre conduite (3) ou à un autre élément de couplage de l'autre conduite (3).

10. Utilisation d'une conduite fermée (3) dans une structure de talus ou une masse de terre selon l'une quelconque des revendications précédentes, en même temps aussi bien comme élément d'une installation de géothermie que comme armature horizontale.
